(19) Europäisches Patentamt
European Patent Office
Office européen des brevets

(11) Veröffentlichungsnummer: **0 038 552**
**B1**

(12) **EUROPÄISCHE PATENTSCHRIFT**

(45) Veröffentlichungstag der Patentschrift: **01.02.84**

(21) Anmeldenummer: **81103008.9**

(22) Anmeldetag: **21.04.81**

(51) Int. Cl.³: **C 04 B 15/06**, C 04 B 15/02, B 28 B 1/44, B 28 B 7/16

(54) **Verfahren zum Herstellen von Wandbausteinen auf Kalksilikatbasis und Vorrichtung zum Herstellen von Steinrohlingen.**

(30) Priorität: **22.04.80 DE 3015432**

(43) Veröffentlichungstag der Anmeldung: **28.10.81 Patentblatt 81/43**

(45) Bekanntmachung des Hinweises auf die Patenterteilung: **01.02.84 Patentblatt 84/5**

(84) Benannte Vertragsstaaten: **AT BE CH DE FR GB IT LI LU NL SE**

(56) Entgegenhaltungen:
**AU - B - 412 135**
**DE - A - 1 683 888**
**DE - A - 2 325 165**
**DE - B - 2 526 258**
**DE - B - 2 617 153**
**DE - B - 2 709 858**
**GB - A - 1 438 062**

(73) Patentinhaber: **SICOWA Verfahrenstechnik für Baustoffe GmbH & Co. KG, Handerweg 17, D-5100 Aachen (DE)**

(72) Erfinder: **Schubert, Peter, Dipl.-Ing., Melatener Strasse 159 b, D-5100 Aachen (DE)**
Erfinder: **Pfeifer, Hermann, Dr.-Ing., Hainbuchenstrasse 6, D-5100 Aachen (DE)**
Erfinder: **Hermann, Volker, Dr.-Ing., Breslauer Strasse 27 c, D-6208 Bad Schwalbach (DE)**
Erfinder: **Keller, Reimund, Essener Strasse 66, D-4320 Hattingen 16 (DE)**
Erfinder: **Schulz, Eckhard, Lilienstrasse 10, D-4512 Wallenhorst 1 (DE)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Verfahren zum Herstellen von Wandbausteinen auf Kalksilikatbasis und Vorrichtung zum Herstellen von Steinrohlingen

Die Erfindung betrifft ein Verfahren zum Herstellen von Kalksilikatsteinen nach dem Oberbegriff des Anspruchs 1 sowie eine Vorrichtung zum Herstellen von Steinrohlingen, insbesondere für die Herstellung von Wandbausteinen auf Kalksilikatbasis, nach dem Oberbegriff des Anspruchs 13.

Kalksilikatsteine mit verdichtetem Gefüge wie Kalksandsteine werden üblicherweise hergestellt, indem eine Rohmischung aus Quarzsand, Kalk und Wasser, wobei der Kalk mit dem Wasser gegebenenfalls in Mischung mit dem Quarzsand gelöscht wird, hergestellt wird, wobei die Rohmischung eine fast trockene, fast staubige bis leicht erdfeuchte Konsistenz hat und unter Verwendung von hohen Drücken in der Größenordnung von über 15 N/mm$^2$ in einer Verdichtungseinrichtung zu Steinrohlingen verdichtet werden muß. Durch diese Verdichtung ergeben sich physikalische Bindungskräfte, die infolge des hohen Drucks ausreichen, eine Rohlingsfestigkeit zu erzielen, die genügt, damit der Rohling ohne Beschädigungen entformt und zu einem Autoklaven transportiert werden kann, in dem eine Dampfhärtung stattfindet. Die Dampfhärtung führt zur Ausbildung von chemischen Bindungskräften infolge der Bildung von Calciumsilicathydratbrücken, die dem Stein die Endfestigkeit verleihen. Die Verwendung derartig hoher Drücke für die Herstellung der Rohlinge ist aber sowohl anlagenmäßig als auch in bezug auf den herzustellenden Stein selbst nachteilig, da durch den hohen Verdichtungsdruck auch eine hohe Scherbenrohdichte verbunden mit einer geringen Wärmedämmfähigkeit erzeugt wird. Zudem läßt die hohe Scherbenrohdichte keine großen Steinformate wegen zu großer Arbeitsbelastung der Maurer beim Mauern zu.

Um die Scherbenrohdichte herabzusetzen und damit die Wärmedämmeigenschaften zu erhöhen, wird nach der DE-B 2 526 258 der sonst üblichen Rohmischung für Kalksandsteine Zement in einer Menge von mindestens 1 Gew.-% und ein Zusatz von Schaum oder Porenbildnern zugegeben und dann bei wesentlich niedrigeren Verdichtungsdrücken als 15 N/mm$^2$ gearbeitet. Der Zementzusatz ersetzt teilweise die zur Erzielung einer ausreichenden Rohlingsfestigkeit notwendigen physikalischen Bindungskräfte durch chemische, da man festigkeitsbildende Reaktionen des Zements vor dem Formen des Steinrohlings in Gang kommen läßt. Durch den geringeren Druck läßt sich die Scherbenrohdichte wesentlich herabsetzen, und es wird möglich, Leichtzuschläge, die die Wärmedämmeigenschaften weiter verbessern, effektiv zu verwenden, und die Steine werden bei diesem Verfahren mit einem Lochbild mit einem hohen Lochanteil von einer Vielzahl von durch Stege voneinander getrennten Löchern hergestellt, die die Wärmedämmeigenschaften vorteilhaft beeinflussen und zudem das Gesamtgewicht des Steins erheblich herabsetzen. Die Stärke der Stege kann jedoch noch nicht entsprechend der gewünschten Optimierung verringert werden, da bei der an sich gewünschten geringen Stegstärke die Stege beim Formen des Rohlings nicht einwandfrei ausgebildet würden. Außerdem ist die Verfahrensführung dann schwierig, wenn eine Zwischenlagerung der Rohmischung bis zum Eintreten der festigkeitsbildenden Reaktionen des Zements erforderlich ist. Zudem ist die Verarbeitung der Rohmischung an sich problematisch, wenn eine Verfahrensführung mit Zwischenlagerung gewählt wird, und zwar insbesondere bei Störungen der nachfolgenden Anlagenteile.

Aus der GB-A 1 438 062 ist ein Verfahren zum Herstellen eines porigen Leichtbaustoffs auf der Basis eines Kalkbindemittels und silikathaltigem Material bekannt. Das Bindemittel besteht hierbei aus ungelöschtem Kalk, vorzugsweise mit hoher Reaktivität und Reinheit, einer wäßrigen Dispersion von Kalkhydrat und gegebenenfalls Zement. Zur Ausbildung von Poren werden Leichtzuschläge, Schaum und insbesondere Al-Pulver verwendet. Zur Herstellung der Rohmischung werden zunächst Wasser, dann Kalkmilch und anschließend die festen Stoffe in ein Rührgefäß gegeben. Durch Verwendung von vorgewärmtem Wasser und durch die Löschwärme des Kalks ergibt sich eine erhöhte Temperatur. Nach Eingießen der Rohmischung in Formen werden letztere in einen Raum mit erhöhter Temperatur gebracht. Nachdem ein anfängliches Ansteifen in ca. 1,5 bis 3 h erreicht ist, wird entformt, der Block in die gewünschten Formate geschnitten und anschließend autoklavgehärtet. Es ergeben sich somit relativ lange Formstandzeiten, die einerseits eine Einzelsteinherstellung unwirtschaftlich machen, andererseits aber durch die Blockherstellung im Zusammenhang mit den relativ langen Formstandzeiten zu Sedimentationserscheinungen führen. Abgesehen davon sind die Blöcke zu zertrennen, und es ergibt sich immer Abfall im Bereich der Oberseite des Blocks. Der Zement dient nur zum Erzielen einer ausreichenden Endfestigkeit.

Ferner ist aus der DE-B 2 617 153 ein Verfahren zur Herstellung leichtgewichtiger Schaumbetonkörper bekannt, bei dem man eine rasch abbindende hydraulische Zementmasse in Form eines feinteiligen trockenen Pulvers mit einer ein Treibmittel und ein Abbindehemmittel enthaltenden wäßrigen aufgeschäumten Flüssigkeit mischt. Die Mischung wird dann in eine Form gegeben, wo sie abbindet und die gewünschte Anfangsfestigkeit in etwa 10 bis 30 min erreicht wird. Das Abbinden erfolgt bei 20 bis 40° C, da bei höheren Temperaturen die Anfangsfestigkeit schlechter würde. Gegebenenfalls kann eine Autoklavhärtung vorgenommen werden. Dadurch, daß die Schaumbetonkörper überwiegend aus Zement bestehen, sind sie teuer in der Herstellung, außerdem sind die Formstandzeiten relativ lang.

Außerdem ist aus der DE-A-2 325 165 ein Verfahren zur Herstellung von Hohlblocksteinen bekannt, die aus Leichtbeton bestehen, wobei Dorne in eine mit der Rohmischung gefüllte Form eingeführt werden. Ansonsten entspricht dieses Verfahren der üblichen Herstellung von Betonsteinen.

Aufgabe der vorliegenden Erfindung ist es, ein Verfahren und eine Vorrichtung der eingangs genannten Art zu schaffen, die eine einfachere Verfahrensführung sowie neben der Erzielung optimaler Wärmedämmeigenschaften der Kalksilikatsteine das Herstellen von Kalksilikatsteinen mit besonders geringer Scherben- sowie Steinrohdichte und gegebenenfalls mit einem optimalen Lochmuster ermöglichen.

Verfahrensmäßig wird diese Aufgabe entsprechend Anspruch 1 gelöst.

Die hierbei verwendete Rohmischung besitzt eine gießfähige Konsistenz, d. h. daß sie im wesentlichen selbstnivellierend (ohne natürlichen Böschungswinkel beim Schütten) und ohne meßbares Ausbreitmaß ist (> K3 nach DIN 1045). Die Rohmischung weist hierbei praktisch nur solche Hohlräume auf, die durch den zugesetzten Schaum gebildet werden. Ohne den zugesetzten Schaum betrachtet, sind die Hohlräume zwischen den einzelnen Partikeln der Rohmischung praktisch vollständig mit Wasser ausgefüllt, so daß eine Druckausübung wie bei der konventionellen Kalksandsteinherstellung beim Ausbilden der Steinrohlinge nicht zu einer Erhöhung von physikalischen Bindungskräften und zu einem handhabbaren Rohling führen würde. Die gießfähige Konsistenz ermöglicht ein leichtes und einfaches Dosieren und Füllen der Form mit der erforderlichen Menge an Rohmischung durch Eingießen o. dgl., wobei die Rohmischung die Form im wesentlichen ohne weiteres ausfüllt.

Außerdem ermöglicht es diese gießfähige Konsistenz, die Stege zwischen den Löchern in dem Stein in ihrer Breite weiter herabzusetzen, so daß die Zahl der Löcher und der Gesamtlochanteil bei optimalem Lochbild hinsichtlich der Wärmedämmung vergrößert werden kann, ohne daß mechanische Probleme hinsichtlich der Ausbildung der Löcher oder hinsichtlich der Rohlingsfestigkeit auftreten.

Ferner eignet sich das Verfahren dazu, Vollsteine mit niedriger Rohdichte sowie Loch- und Vollsteine mit integrierter Wärmedämmung herzustellen, wobei man unter letzterem die Ausfüllung eines sich im wesentlichen über die Breite oder Länge des Steins erstreckenden Lochs mit einem wärmedämmenden Material wie etwa ein Polystyrolblock, der in dieses Loch eingesteckt wird, versteht.

Die zur Entformung und zum nachfolgenden Transport ausreichende Festigkeit erhalten die Steinrohlinge durch die beim Formen vorzunehmende Wärmebehandlung, die nicht nur zu kurzen Taktzeiten bei der Herstellung der Rohlinge führt und bei Lochsteinen das Ausbilden von Stegen mit der gewünschten geringen Wandstärke und trotzdem mit der erforderlichen Festigkeit im Rohling ermöglicht, sondern überhaupt erst eine wirtschaftlich akzeptable Verarbeitung einer Rohmischung mit einer gießfähigen Konsistenz drucklos oder im wesentlichen drucklos, und zwar insbesondere ohne Notwendigkeit einer Zwischenlagerung der Rohmischung vor dem Verformen zuläßt. Die Verweilzeit in der Form und damit die Taktzeit sinken mit der Erhöhung der Durchwärmtemperatur für die Rohmischung und/oder des Zementanteils. Infolge der praktisch drucklosen Herstellung der Rohlinge ist der Zusatz von Schaum zur Rohmischung besonders effektiv, da die Schaumporen praktisch bei der Rohlingsherstellung nicht zerdrückt werden und somit im wesentlichen voll zur Herabsetzung der Scherbenrohdichte des Steins und damit auch zur Erhöhung der Wärmedämmeigenschaften beitragen. Überraschend ist ferner, daß die durch den Schaum vorgegebenen Poren im Stein erhalten bleiben, obwohl der Schaum an sich bei den vorgesehenen Durchwärmtemperaturen für die Rohmischung in der Form nur noch eine geringe Standfestigkeit besitzt, falls dieser bei den verwendeten Temperaturen überhaupt noch vorhanden ist.

Dieses Verfahren hat nichts mit der an sich bekannten Herstellung von Gasbeton zu tun, bei denen die Poren durch Gasentwicklung in einer bereits in einer Form befindlichen Rohmischung erzeugt werden, wobei der Gasbeton 2 h und mehr in der Form verbleibt. Durch die erst in der Form stattfindende Gasentwicklung kommt es zu einer nicht genau bestimmbaren Ausdehnung, die ein anschließendes Zerschneiden des Gasbetons in Blöcke gewünschter Größe, die gegebenenfalls sogar geschliffen werden müssen, erfordern. Bei der Herstellung von Gasbeton ist die Formgebung mit dem Bindevorgang verbunden, und es lassen sich nur Sande mit feiner Sieblinie, die eine sehr kleine Korngröße besitzen müssen, verwenden. Demgegenüber ist beim erfindungsgemäßen Verfahren die Maßgenauigkeit der hergestellten Steine durch die Formgebung gewährleistet, die unabhängig von den stattfindenden chemischen Reaktionen ist (die sich im übrigen von denjenigen, die bei der Herstellung von Gasbeton auftreten, wesentlich unterscheiden), so daß keinerlei Nachbearbeitung erforderlich ist und außerdem auch Sande mit grobkörnigen Anteilen oder andere silikathaltige Materialien verwendet werden können.

Ein wesentlicher Vorteil gegenüber der bisher bekannten Herstellung von Kalksandsteinen ergibt sich dadurch, daß auch gelöschter Kalk als Ausgangsmaterial anstelle von ungelöschtem eingesetzt werden kann. Dies kann in Form von Kalkschlamm, Kalkhydrat o. dgl. geschehen. Hierdurch werden die Temperaturprobleme, die ansonsten durch die beim Löschen des Kalks entstehende Wärme auftreten können, wesentlich herabgesetzt. Außerdem läßt sich die Wasserzugabe leichter gestalten, da die Feuchte im Sand gut bestimmbar ist, dagegen nicht im gerade gelöschten Kalk wegen des vorhandenen Kristallwassers, das bei der Bestimmung des Wassergehaltes mitgemessen wird. Bei der konventionellen Kalksandsteinherstellung ist die Verwendung von gelöschtem Kalk wie Hydratkalk o. dgl. dagegen wegen des normalerweise vorhandenen und gewöhnlich auch noch schwankenden Wassergehaltes des Sandes nicht möglich, da hierdurch der Rohmischung so viel Feuchtigkeit zugeführt würde, daß keine Rohlinge mehr ausformbar wären.

Anstelle des üblicherweise verwendeten Quarzsandes lassen sich auch andere silikathaltige Materialien verwenden, etwa Bims, Tonerde oder Flugasche o. dgl., die den Quarzsand ganz oder teilweise ersetzen können und gegebenenfalls auch noch zu einer Gewichtsverminderung des fertigen Steins beitragen.

Als Zement kann beispielsweise ein Portlandzement in Kombination mit einer bestimmten Menge an Erhärtungsbeschleuniger und gegebenenfalls -verzögerer, aber auch beispielsweise ein Schnellzement mit entsprechend eingestelltem Erhärtungszeitbeginn verwendet werden. Als Abbindebeschleuniger kommen beispielsweise alkalische wie Natriumaluminat, -carbonat, -silikat, chlorhaltige wie Aluminium- und Calciumchlorid sowie wasserlösliche Aluminate und Silikate und als Verzögerer Sulfate und Zuckerderivate in Frage.

Der Rohmischung können Leichtzuschläge in Form von Kork-, Holzmehl, Polystyrolkugeln o. dgl. zugegeben werden. Auch können an sich bekannte Verflüssiger eingesetzt werden, die die Rohmischung zusätzlich verflüssigen.

Die Rohmischung kann sowohl volumetrisch als auch gravimetrisch in die Formen dosiert werden, wobei allerdings ersteres bevorzugt ist, weil sich dann schnell und mit einfachen Mitteln Steine mit im wesentlichen konstanten Gewicht ergeben. Mögliche Schwankungen der Rohdichte der Rohmischung werden ausgeglichen, indem die volumetrisch dosierte Menge gewogen und entsprechend dem dabei erhaltenen Meßwert die Dichte der Rohmischung für die folgende Charge nachgeregelt wird. Dies erfolgt durch entsprechende Bemessung der Wasser- und Schaummenge in der Rohmischung.

Zum Ausformen der Löcher können Formen verwendet werden, die entsprechend ausgebildete Dorne besitzen, jedoch wird es bevorzugt, die Löcher auszubilden, indem Dorne in die teilweise gefüllte Form insbesondere von oben durch die Deckelplatte der Form eingefahren werden, wodurch die Form dann mit der Rohmischung ausgefüllt wird. Bei einer allseitig geschlossenen Form und einer geringen Überfüllung bezüglich des vorgesehenen Steinvolumens wird hierbei gleichzeitig die Scharfkantigkeit des geformten Rohlings gewährleistet, während die gießfähige Konsistenz der Rohmischung das Aufsteigen von dieser zwischen den Dornen und damit die Ausbildung der Löcher bei nur sehr geringer mechanischer Belastung der einzufahrenden Dorne ermöglicht. Die Löcher werden vorzugsweise als Sacklöcher ausgebildet.

Das Erwärmen wird während eines Zeitraums von 10 bis 60 sec durch Erhitzen mittels eines Hochfrequenzfeldes vorgenommen und bewirkt ein Erhärten des Zementes (jedoch praktisch nicht des Calciumhydroxids durch Ausbildung von Calciumsilicathydratbrücken) in einem solchen Maße, daß die erforderliche Rohlingsfestigkeit größer 0,1 N/mm$^2$ in diesem Zeitraum trotz der gießfähigen Konsistenz der Rohmischung erreicht wird, wobei sich eine lederharte Oberfläche des Steinrohlings ohne einen an Flüssigkeit völlig verarmten Oberflächenbereich ergibt, so daß kein Abbröseln stattfindet. Die auf diese Weise erreichten Taktzeiten sind industriell akzeptabel und vermeiden eine komplexe und in bezug auf den zeitlichen Ablauf des Verfahrens problematische Zwischenlagerung.

Der Schaum wird entweder als solcher der Rohmischung beigegeben oder in dieser vor dem Einfüllen in die Form durch Zusatz eines Schaumbildners ausgebildet, jedoch wird ersteres bevorzugt. Schaumrohdichten von etwa 50 bis 100 g/l, insbesondere von etwa 70 bis 80 g/l, werden bevorzugt. Statt mit Luft kann der Schaum auch mit $CO_2$ gefüllt sein, wodurch bei Überfüllung der Form und einem anschließenden Zerdrücken des zuviel dosierten Schaums und/oder beim Zerfallen des Schaums unter der Wärmeeinwirkung $CO_2$ frei wird, das zu zusätzlichen festigkeitsbildenden Reaktionen wie beim Luftmörtel führt. Durch Einstellung der Schaummenge und gegebenenfalls der anderen Bestandteile der Rohmischung wird diese vorzugsweise so eingestellt, daß sich eine Scherbenrohdichte des Steins $<1600$ kg/m$^3$ für einen Lochstein, wobei sich Scherbenrohdichten unterhalb von 1200 kg/m$^3$ ohne weiteres erzielen lassen, und $<900$ kg/m$^3$ für einen Vollstein ergibt.

Da Schäume häufig temperaturempfindlich sind, ist es zweckmäßig, die Temperatur der Rohmischung bis zum Einfüllen in die Form so niedrig zu halten, daß die Standfestigkeit des Schaums durch die Temperatur praktisch nicht beeinträchtigt wird. Bei Verwendung von gelöschtem Kalk stellt dies kein Problem dar, denn dann besitzt die Rohmischung eine Temperatur, die sich aus den Temperaturen der Ausgangsmaterialien zusammensetzt, die im wesentlichen nur jahreszeitlichen Schwankungen unterliegen. Wenn jedoch die Löschwärme von ungelöschtem Kalk, der als Ausgangsmaterial eingesetzt wird, hinzukommt, ist gegebenenfalls eine Kühlung etwa durch entsprechende Wärmeabstrahlung o. dgl. vorzunehmen. So besitzen synthetische Schäume praktisch nur unterhalb von 30°C eine ausreichende Standfestigkeit, während Proteinschäume auch oberhalb von 30°C bis 40°C und gegebenenfalls darüber eine ausreichende Standfestigkeit aufweisen. Je nach verwendetem Schaum und der Temperatur der eingesetzten Materialien sowie der verwendeten Installation kann man daher die Temperatur der Mischung aus silikathaltigem Material, Kalk und Wasser und damit die Zugabe an Zement, Beschleuniger und Verzögerer sowie Schaum konstant halten oder entsprechend der Ausgangstemperatur der Mischung aus silikathaltigem Material, Kalk und Wasser die Schaummenge und/oder die Menge an Verzögerer und/oder Beschleuniger für den Zement dosieren.

Dabei ist der Zement hinsichtlich des Ingangsetzens von festigkeitsbildenden Reaktionen durch entsprechenden Zusatz von Beschleunigern und Verzögerern in Abhängigkeit von der Temperatur der Rohmischung so einzustellen, daß diese Reaktionen erst durch die Wärmeeinwirkung in der Form ausgelöst werden. Hierzu kann es ebenfalls erforderlich sein, vom Löschen des Kalkes stammende Wärme entsprechend abzuführen. Deshalb ist es zweckmäßig, die Schaumart und -menge und ein Verzögerer entsprechend der Temperatur der Mischung aus silikathaltigem Material, Kalk und Wasser geregelt zuzugeben.

Um das Entformen des Steinrohlings zu erleichtern und Anbackungen zu vermeiden, wird es bevorzugt, die Form und die Dorne vor dem Einfüllen der Rohmischung mit einem an sich bekannten Trennmittel zu benetzen. Dies kann durch Besprühen oder Eintauchen vorgenommen werden, wobei es bei letzterem zweckmäßig ist, ein mittels Ultraschall erregtes Trennmittelbad zu benutzen, um dadurch Reste der Rohmischung von der Form und den Dornen zu entfernen.

Die obengenannte Aufgabe wird vorrichtungsgemäß entsprechend Anspruch 13 gelöst.

Das Durchwärmen der Rohmischung mittels eines elektrischen Feldes eignet sich sowohl für Voll- als auch für Lochsteine und kann durch Beheizen der Form selbst unterstützt werden. Für die Erwärmung der Rohmischung in der Form mittels eines Hochfrequenzfeldes sind Frequenzen $>600$ kHz bei Spannungen $>5$ kV verwendbar, wobei Frequenzen bis zu 30 MHz eingesetzt werden können.

Die Fülleinrichtung kann eine Einrichtung zum Eingießen der Rohmischung in die Form sein, da die Rohmischung gießfähige Konsistenz besitzt. Sie kann gleichzeitig zum Dosieren der Rohmischung dienen.

Bei der Vorrichtung sind insbesondere die Dorne in den gewünschten Abmessungen in dem vorgesehenen Lochmuster angeordnet und als Ganzes in eine mit Rohmischung befüllte Form, und zwar bevorzugt von oben und insbesondere nur bis zu einem bestimmten Abstand über dem Boden der Form zur Ausbildung von Sacklöchern einfahrbar. Dabei kann die Form eine zum Verschließen hiervon in Schließstellung bringbare Deckelplatte aufweisen, die entsprechende Öffnungen zum Einfahren der Dorne besitzt und gegebenenfalls an einer Halterung für die Dorne mit diesen bis auf eine vorbestimmte Höhe absenkbar angeordnet ist.

Die Vorrichtung kann jedoch auch einen hochfahrbaren Boden bei einer während der Formgebung feststehenden Deckelplatte aufweisen, wobei gegebenenfalls die Dorne fest am boden angeordnet und mit diesem hochfahrbar sind. Der Boden kann aber auch aus einem umlaufenden endlosen Transportband, etwa einem Stahlband, bestehen, das beispielsweise intermittierend entsprechend der Taktzeit antreibbar ist.

Der Querschnitt der Dorne ist vorzugsweise wenigstens im Bereich des freien Endes hiervon zu diesem Ende hin verjüngt, beispielsweise im Querschnitt konisch und/oder abgerundet o. dgl., um das Entformen zu erleichtern. Auch kann jeder Dorn an seinem freien Ende eine Belüftungsöffnung aufweisen, um beim Herausziehen der Dorne aus dem geformten Steinrohling das Entstehen eines Vakuums in diesem Bereich zu unterbinden, da dieses zu einem Zusammenfallen der Stege führen könnte.

Die Dorne sind vorzugsweise mit einer elektrischen Heizeinrichtung (Heizpatronen) beheizbar, wobei die Heizintensität über die Länge der Dorne kontinuierlich oder abschnittweise (z. B. in drei Stufen) unterschiedlich ist, so daß in Axialrichtung der Dorne ein Temperaturgefälle unter Anpassung an den beim Einfahren der Dorne in die eingefüllte Rohmischung sich ausbildenden Wärmebedarf der Rohmischung mit dem Ziel einer möglichst gleichmäßigen Erwärmung der Rohlingsmasse ausgebildet wird. Da der Wärmebedarf infolge der etwa mittels Kontaktheizplatten beheizten Wände der Form über den Querschnitt des Steinrohlings gesehen ebenfalls nicht gleichmäßig ist, ist die Heizintensität der über der Grundfläche verteilt angeordneten Dorne unterschiedlich groß auszulegen, um einerseits die jeweils von einem Dorn zu erwärmende Masse und andererseits die Wärmezufuhr anderer Bauteile, etwa der Form, zu berücksichtigen.

Die Bodenplatte, die etwa als Palette oder als Transportband o. dgl. ausgebildet ist, wird gegebenenfalls vorgeheizt, etwa induktiv oder durch Infrarotbestrahlung.

Bei Verwendung eines Trennmittelbades für die Dorne kann der gegenseitige Abstand zwischen der im wesentlichen auf gleichem Niveau angeordneten Form und dem Bad gleich dem gegenseitigen Abstand zwischen einer Fülleinrichtung für die Form und den zu einer Lochungseinrichtung angeordneten Dornen sein, so daß das auf einem gemeinsam bewegbaren Träger mit der Form angeordnete Band unter die Dorne der Lochungseinrichtung bewegt wird, wenn sich die Form zur Fülleinrichtung bewegt.

Die Deckelplatte wird beim Entformen zunächst in ihrer Stellung gehalten, bis die Seitenwandungen der Form und die Dorne wenigstens teilweise vom Steinrohling abgehoben sind, um auf diese Weise ein problemloses Entformen zu ermöglichen.

Wenn man als Bodenplatte der Form ein Transportband verwendet, ist es möglich, die Steinrohlinge bereits zu entformen, wenn sie noch nicht die für das Greifen und Abstapeln gewünschte Rohlingsfestigkeit erreicht haben, wonach sie mittels des Transportbandes durch eine Nachheizeinrichtung, beispielsweise einen Heiztunnel oder eine Infrarotbeheizung, geführt werden, wo infolge der dort einwirkenden Wärme eine weitere Verfestigung zur gewünschten Rohlingsfestigkeit für das Greifen und Abstapeln erfolgt. Dies ist möglich, da die Steinrohlinge erst am Ende des Transportbandes handhabbar sein müssen, da sie dort ergriffen werden, um zu einem Autoklaven in gestapelter Form befördert zu werden.

Die Erfindung wird nachstehend anhand der in den Abbildungen dargestellten Ausführungsbeispiele näher erläutert.

Fig. 1 veranschaulicht schematisch den Ablauf des Verfahrens entsprechend zweier Ausführungsformen.

Fig. 2 veranschaulicht schematisch den zeitlichen Ablauf der Herstellung eines Steinrohlings durch Formgebung und Erhitzen.

Fig. 3 zeigt im einzelnen das Ausformen von Löchern in dem Steinrohling.

Fig. 4 zeigt eine Ausführungsform einer Deckelplatte für eine Form zur Herstellung eines Steinrohlings.

Fig. 5 zeigt eine Anordnung von Dornen zur Ausformung eines bestimmten Lochmusters in einem Steinrohling.

Fig. 6 zeigt teilweise im Schnitt und teilweise in stirnseitiger Ansicht eine Ausführungsform einer Vorrichtung zum Herstellen eines Steinrohlings.

Fig. 7 zeigt eine Teildraufsicht entsprechend der Linie VII-VII von Fig. 6.

Fig. 8 zeigt eine Seitenansicht der Vorrichtung von Fig. 6.

Fig. 9 zeigt eine Fülleinrichtung für die Vorrichtung von Fig. 6 in stirnseitiger Ansicht.

Fig. 10 zeigt die Fülleinrichtung von Fig. 9 von der Seite.

Fig. 11 zeigt eine weitere Ausführungsform einer Vorrichtung zum Herstellen von Steinrohlingen in schematisierter Form.

Fig. 12 zeigt eine Dosiereinrichtung für die Vorrichtung von Fig. 11.

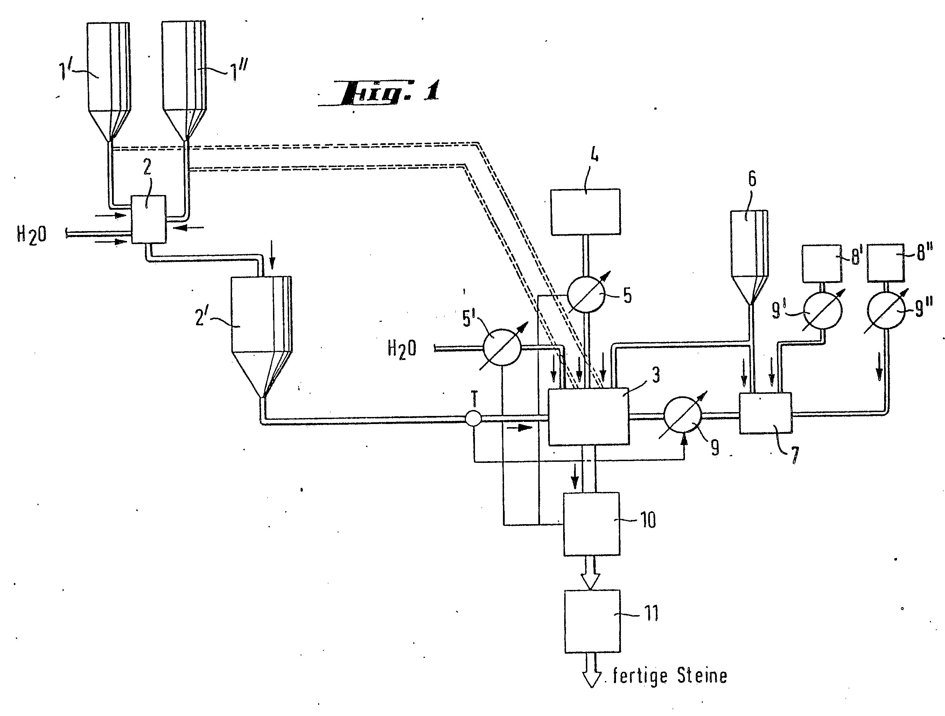

Gemäß der ersten in Fig. 1 dargestellten Ausführungsform des Verfahrens werden von einem Silo 1', der Quarzsand enthält, und einem Silo 1'', der gemahlenen, gebrannten Feinkalk enthält, diese beiden Materialien einem Vormischer 2 zugeführt, dem gleichzeitig Wasser in genügender Menge zugegeben wird. Die Mischung läßt man in einem Reaktor 2' während eines genügend langen Zeitraums reagieren, um den Kalk zu löschen. Die Mischung aus gelöschtem Kalk und Sand wird einem Mischer 3 zugeführt, in den ferner Wasser eingeführt wird, um eine genügend flüssige Konsistenz der endgültigen Rohmischung zu erzielen. Hierdurch wird gleichzeitig die Temperatur der vom Löschen gegebenenfalls noch relativ warmen Mischung aus gelöschtem Kalk und Sand auf (jahreszeitlich) z. B. um eine Temperatur von etwa 20°C schwankende Werte herabgesetzt. Ferner ist eine Schaumerzeugungseinrichtung 4 etwa eine Schaumkanone, vorgesehen, von der erzeugter Schaum über ein Regelorgan 5 geregelt ebenfalls dem Mischer 3 zugegeben wird. Zement aus einem Vorratsbehälter 6 wird einerseits direkt dem Mischer 3 zugeführt und andererseits in einen Nebenmischer 7 gegeben, dem ferner aus einem Behälter 8' ein Erhärtungsbeschleuniger und aus einem Behälter 8'' ein Erhärtungsverzögerer zugeführt wird. Dieser Zementanteil zusammen mit Beschleuniger und Verzögerer werden in dem Nebenmischer 7 zur besseren späteren Durchmischung in dem Mischer 3 zunächst vorgemischt. Die Zugabe von Beschleuniger und Verzögerer erfolgt über Regelorgane 9' und 9''. Die im Nebenmischer 7 erzeugte Mischung wird dann über ein Regelorgan 9 dem Mischer 3 zugeführt. Die Regelung der Regelorgane 9, 9' und 9'' erfolgt entsprechend der Temperatur T, die die in den Mischer 3 gelangende Mischung aufweist, um die Rezeptur von Zement, Beschleuniger und Verzögerer auf die jeweiligen Bedingungen einzustellen. Beispielsweise nach einer Mischzeit von 1 min gelangt die fertige Rohmischung von dem Mischer 3 in eine Vorrichtung 10 zum Herstellen der Steinrohlinge durch Formen und Erhitzen. Hierbei kann das Dosieren volumetrisch erfolgen, wonach das Gewicht der volumetrisch bestimmten Menge an Rohmischung bestimmt und zum Regeln der Wasser- und Schaummenge für die folgende Charge über die Regler 5 und 5' verwendet wird, um eine Rohmischung mit möglichst konstanter Rohdichte zu erzeugen. Nach dem Entformen erden die Steinrohlinge auf Härtewagen gestapelt und zu einem Autoklaven 11 befördert, wo sie einer Dampfhärtung unterworfen werden, und verlassen den Autoklaven als fertige Kalksilikatsteine.

Wenn anstelle von ungelöschtem Kalk gelöschter Kalk verwendet wird, wird dieser direkt aus dem Silo 1'' dem Mischer 3 ebenso wie der Sand zugeführt, wie in Fig. 1 gestrichelt dargestellt ist.

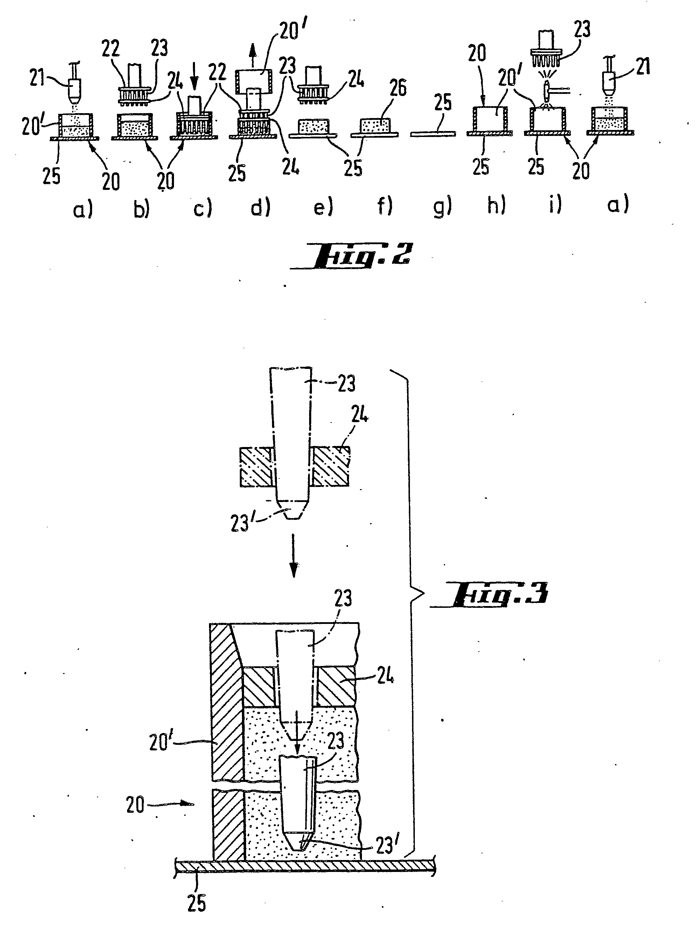

In Fig. 2 ist die Formung eines Lochsteinrohlings im Ablauf dargestellt. Zunächst wird eine beheizte Form 20 durch eine Fülleinrichtung 21 mit Rohmischung einer bestimmten Menge, die volumetrisch bemessen wird, gefüllt, Bild a. Danach wird die Form 20 unter abwärts verfahrbaren, zu dem gewünschten Lochmuster angeordneten und an einer Tragplatte 22 befestigten Dornen 23 angeordnet, wobei die freien Enden der Dorne 23 sich etwa in Höhe von Ausnehmungen in einer Deckelplatte 24 für die Form 20 befinden, Bild b. Danach werden die Dorne 23 zunächst mit der Deckelplatte 24 abwärts bewegt, bis die Deckelplatte 24 die vorgesehene Endstellung entsprechend der Höhe des herzustellenden Steins erreicht, wonach die Dorne 23 weiter abwärts durch die Öffnungen in der Deckelplatte 24 in die Form 20 hineingefahren werden, bis sie sich kurz über der Bodenplatte 25 der Form 20 befinden, Bild c. Die Form 20 ist nunmehr geschlossen und durch die durch die Dorne 23 bewirkte Verdrängung der Rohmischung wird die gesamte Form 20 unter Ausbildung von scharfen Kanten am Rohling ausgefüllt. In diesem eingefahrenen Zustand der Dorne 23 bei geschlossener Form 20 erfolgt ein Erwärmen der in der Form 20 befindlichen Rohmischung während beispielsweise 0,5 bis 1 min auf beispielsweise etwa 80°C, wobei die Temperaturen der einzelnen Dorne 23 und der Wände der Form 20 derart gesteuert werden, daß sich eine möglichst gleichmäßige Temperaturverteilung über den Rohling, die während des anfänglichen Zeitraums des Taktes langsam auf die Endtemperatur ansteigt, ergibt. Diese Erwärmung führt zu einem Inaktivieren des Verzögerers und einem Aktivieren des Beschleunigers für den Zement, wodurch eine Erhärtung des Zements, jedoch keine wesentliche Reaktion des Calciumhydroxids, stattfindet, so daß der geformte Rohling nach dem Entformen eine genügende Festigkeit aufweist, um der nachfolgenden Handhabung standzuhalten. Der Rohling 26 wird vorzugsweise so entformt, daß zunächst die Seitenwände ein Stück oder gegebenenfalls ganz hochgefahren werden, Bild d, wonach die Dorne 23 der Form 20 gleichzeitig mit bzw. nach den Seitenwänden und danach die Deckelplatte 24 entfernt werden, Bild e. Der Rohling 26, Bild f, wird dann von der Bodenplatte 25 entfernt und beispielsweise auf einer Transporteinrichtung zu einem Autoklaven abgelegt, Bild g. Danach werden die Seitenwände der Form 20 wieder in Position auf der Bodenplatte 25 gebracht, Bild h, um dann (ebenso wie die Dorne 23) mit einem Trennmittel behandelt, etwa besprüht zu werden, Bild i, wonach der Ablauf von vorne beginnt.

Ersichtlich läßt sich bei dieser Art der Formgebung die Form bzw. eine Reihe von aufeinanderfolgenden Formen auf einer taktweise umlaufenden Bahn oder unbeweglich und mit über den Formen in Stellung bringbaren Fülleinrichtungen und Dornen oder bezüglich der Fülleinrichtungen und der Dorne hin- und herbeweglich anordnen. Die insgesamt benötigte Zeit für einen Zyklus liegt etwas oberhalb der Verweilzeit des Rohlings in der Form 20.

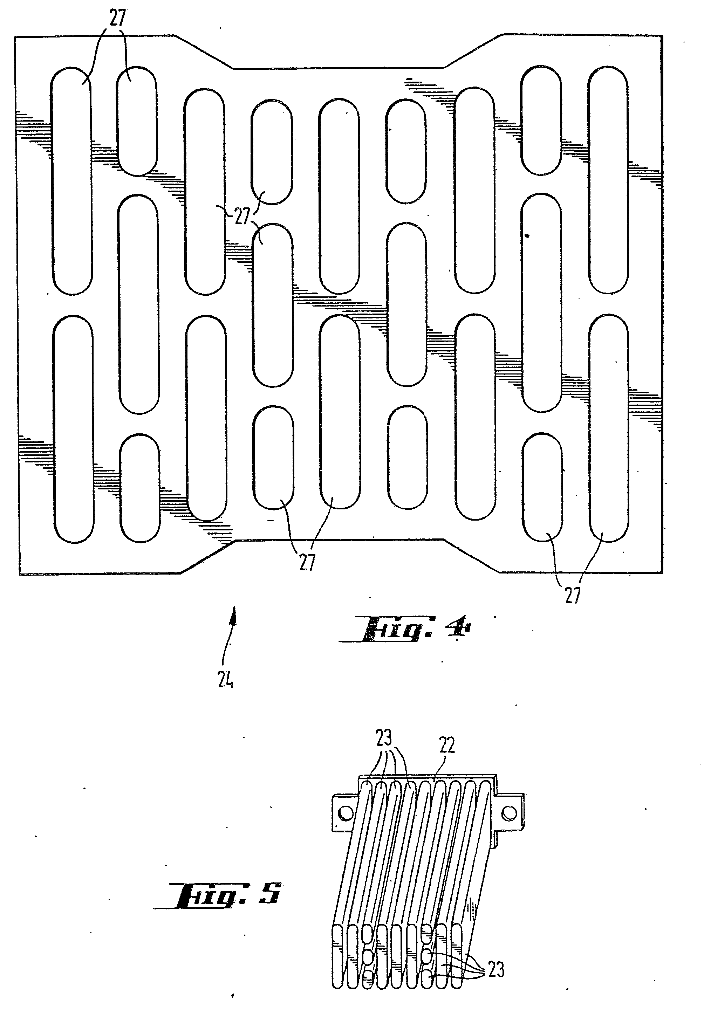

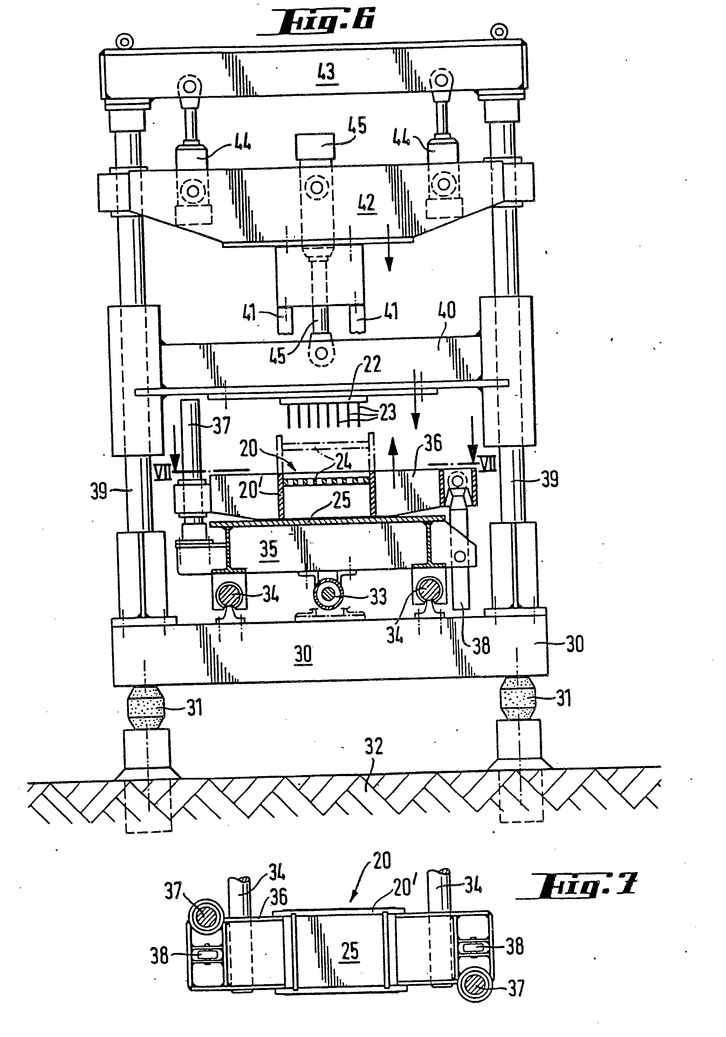

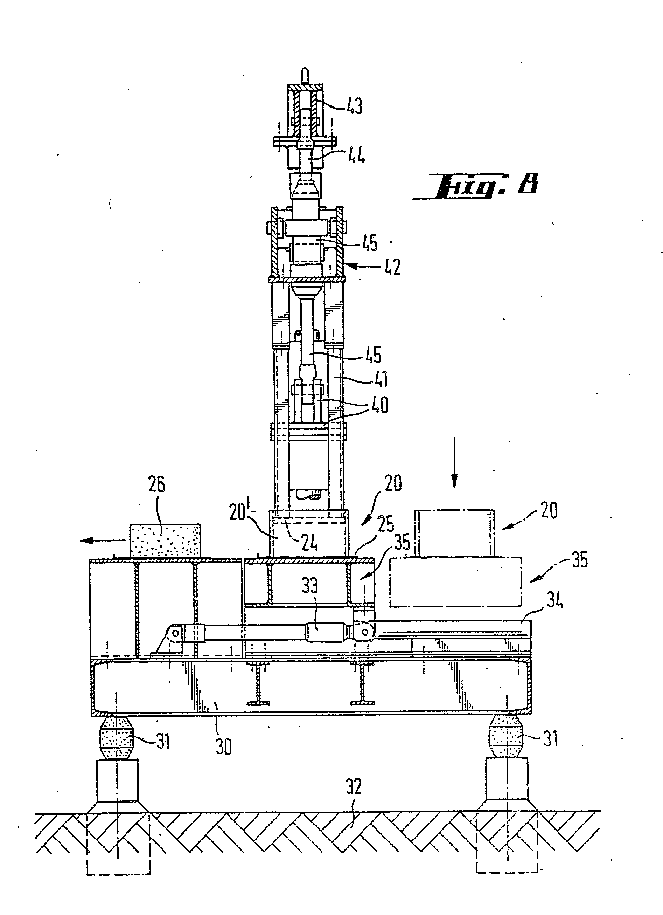

Fig. 3 zeigt im einzelnen ausschnittsweise das Einfahren eines Dorns 23, der sich zunächst mit seinem freien Endabschnitt 23′ (konisch zulaufend ausgebildet) etwa in Höhe der Deckelplatte 24 befindet. Zunächst wird die Deckelplatte 24 mit den Dornen 23 abwärts verfahren, bis sie die vorgesehene Steinhöhe erreicht, auf der ihre Abwärtsbewegung gestoppt wird, während die zum freien Ende 23′ konisch zulaufenden Dorne 23 weiter in die Form 20 hineinbewegt werden, bis sie sich kurz über der Bodenplatte 25 hiervon befinden. Durch die konische Ausbildung des Dorns 23 und des unteren Endabschnitts 23′ mit größerer Konizität wird sowohl das Einfahren als auch das Entformen erleichtert.

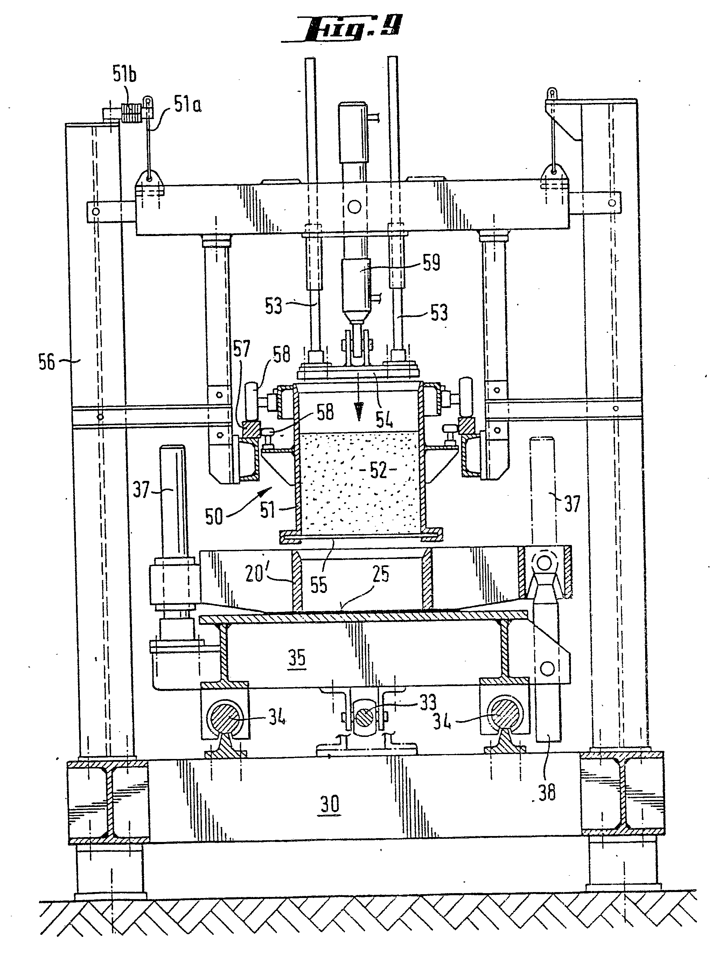

Die Deckelplatte 24 ist in Fig. 4 für ein bestimmtes Lochmuster dargestellt und besitzt eine Reihe von mehr oder weniger langen parallel verlaufenden durch schmale Stege getrennte Öffnungen 27, die in entsprechende Dorne 23, die entsprechend plattenförmig (trotzdem in Axialrichtung konisch) ausgebildet sind, einfahrbar sind und im eingefahrenen Zustand die Öffnungen 27 verschließen. Die Form der Deckelplatten 24 entspricht der Ansicht der Oberseiten der damit geformten Rohlinge 26.

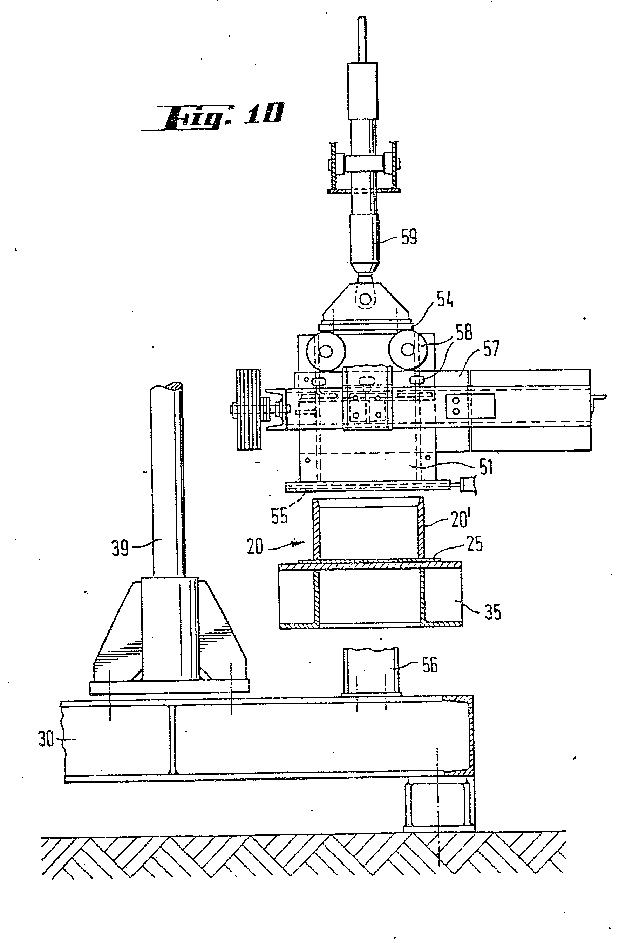

In Fig. 5 ist eine Anordnung von Dornen 23 perspektivisch dargestellt, die für ein anderes Lochmuster als das in Fig. 4 dargestellte an einer Tragplatte 22 befestigt sind. Die Konizität der Dorne 23 und der Endabschnitte 23′ ist hierbei aus Vereinfachungsgründen nicht gezeigt.

Die in den Fig. 6 bis 8 dargestellte Ausführungsform einer Vorrichtung zum Herstellen von Steinrohlingen besitzt einen Grundrahmen 30, der sich über Gummipuffer 31 am Untergrund 32 abstützt. Auf dem Grundrahmen 30 ist ein im dargestellten Ausführungsbeispiel mittels einer Kolben-Zylinder-Einheit 33 horizontal längs Führungen 34 hin- und herbeweglicher Schlitten 35 angeordnet, der einerseits die Bodenplatte 25 der Form 20 und andererseits einen die Seitenwände der Form 20 bildenden Formkasten 20′ trägt. Der Formkasten 20′ ist hierbei an einem Rahmen 36 befestigt, der seinerseits an vertikalen Säulen 37, die an den Seiten des Schlittens 35 benachbart zu den Führungen 34 angeordnet sind, geführt und mittels Kolben-Zylinder-Einheiten 38 auf- und abbeweglich ist.

Von dem Grundrahmen 30 erstrecken sich ferner senkrecht nach oben zwei Säulen 39, an denen ein Querhaupt 40 mittels eines entsprechenden Antriebs auf- und abwärtsbeweglich geführt ist. An dem Querhaupt 40 ist die Tragplatte 22 mit den Dornen 23 (die in Fig. 6 nur als Striche angedeutet sind) befestigt. Die Dorne 23 können mittels des Querhauptes 40 zwischen den in Fig. 3 dargestellten Stellungen oberhalb und in die Form 20 verfahren werden.

Die Deckelplatte 24 für die Form 20, die in Fig. 6 in ihrer unteren Stellung in den Formkasten 20′ eingesetzt durchgezogen dargestellt ist, ist an zwei Stangen 41 befestigt, die an einem weiteren Querhaupt 42, das oberhalb des Querhauptes 40 angeordnet und ebenfalls an den Säulen 39 geführt ist, befestigt sind. An den oberen Enden der Säulen 39 befindet sich ein Träger 43, von dem sich zwei Kolbenzylindereinheiten 44 abwärts zum Querhaupt 42 erstrecken, damit dieses auf- und abbewegt werden kann. Das Querhaupt 40 ist mit dem Querhaupt 42 über eine Kolbenzylindereinheit 45 verbunden, so daß zunächst durch Betätigen der Kolbenzylindereinheiten 44 das Querhaupt 40 mit den Dornen 23 und die Deckelplatte 24 gemeinsam abwärts bewegt werden können, wobei die Deckelplatte 24 am Ende der Bewegung ihre Endstellung erreicht, wonach die Kolbenzylindereinheit 45 betätigt wird, um die Dorne 23 in die Form 20 einzufahren. Entsprechende Anschläge für die Bewegung der Querhäupter 40 und 42 können vorgesehen sein.

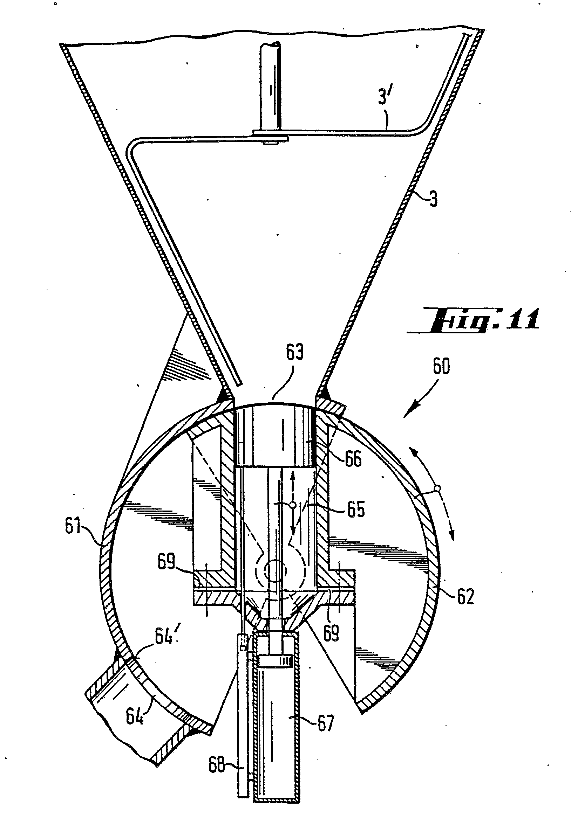

Fig. 8 veranschaulicht zudem die Verschiebung des Schlittens 35, der sich zunächst in der Füllstellung befindet (die Fülleinrichtung ist hier jedoch wegen der Übersichtlichkeit weggelassen), sich dann in den Formgebungs- und Erwärmungsstellung bewegt und von dort den fertigen Rohling 26 in die Entnahmestellung transportiert.

Die Beheizungseinrichtung wie Heizpatronen für die Dorne 23 und Kontaktheizplatten für die Form 20 sind hier ebenso wie eine Einrichtung zum Benetzen der Form 20 und der Dorne 23 mit einem Trennmittel nicht dargestellt.

Fig. 9 und 10 zeigen die in den Fig. 6 bis 8 weggelassene Füllstation mit einer Fülleinrichtung 50.

Bei diesem Ausführungsbeispiel besteht die Fülleinrichtung 50 im wesentlichen aus einem topfförmigen Behälter 51, der aus einem (nicht dargestellten) Mischer mit Rohmischung 52 gefüllt werden kann. Während die Dosierung der Rohmischung in den Behälter 51 volumetrisch erfolgt, wird der Behälter 51 mit den zugehörigen Teilen, die an Seilen 51a aufgehängt sind, gewogen, wobei eine Zugkraftmeßdose 51b das entsprechende Meßsignal liefert, so daß über einen Regelkreis die Zugabe von Wasser und/oder Schaum zur Rohmischung zur Erzielung einer praktisch konstanten Rohdichte geregelt werden kann.

Oberhalb des Behälters 51 ist ein an zwei Führungsstangen 53 geführter Kolben 54 angeordnet, der von oben her in den Behälter 51 eingefahren werden kann. Der Behälter 51 ist an seiner Unterseite mittels eines Schiebers 55 verschlossen, der zum Entleeren des Behälters 51 in den Formkasten 20' geöffnet werden kann, während der Kolben 54 zum vollständigen Entleeren und damit zum Säubern des Behälters 51 während oder nach dem Entleerungsvorgang in diesen einfahrbar ist. Anstelle des Schiebers 55 könnte auch eine ein- oder zweiteilige Klappe verwendet werden.

Der Behälter 51 ist in einem Rahmen 56 zwischen einer Befüllstation für den Behälter 51 durch eine (nicht dargestellte) volumetrisch arbeitende Dosiereinrichtung, die an den (nicht dargestellten) Mischer angeschlossen ist, und einer Füllstation für die Form 20 über in dem Rahmen 56 angeordnete Führungen 57, an denen sich der Behälter 51 mit Laufrädern 58 abstützt, durch einen (nicht dargestellten) Antrieb verfahrbar, während der Stempel 54 in der Füllstation für die Form 20 in dem Rahmen 56 ortsfest aufgehängt und über eine Kolbenzylindereinheit 59 auf- und abfahrbar ist.

Das Ausformen des Steinrohlings in der Form 20 geschieht im wesentlichen drucklos, denn die von der die Toleranz des Steinrohlings begrenzenden Deckelplatte 24 hierbei zwangsläufig ausgeübte, geringe Kraft, die auch zur Ausbildung von Scharfkantigkeit des Steinrohlings dient, führt lediglich zu einem praktisch vernachlässigbaren Druck, der selbst bei einer zweckmäßigerweise vorzunehmenden Überfüllung der Form bis auf ein entsprechendes Zerdrücken von Schaumporen keine irgendwie beachtliche Verdichtung des Steinrohlings zur Folge hat, wie dies erfindungsgemäß auch gewünscht wird.

Es sei an dieser Stelle noch darauf verwiesen, daß es beim Ausfahren der Dorne 23 aus dem Rohling 26 nach erfolgter Beheizung überraschenderweise aufgrund der Ausbildung einer lederharten Oberfläche nicht zu einem Zusammenfallen der Stege kommt, obwohl es sich bei den von den Dornen 23 ausgeformten Löchern um Sacklöcher handelt, so daß von der gegenüberliegenden Seite dieser Löcher keine Luft eintreten kann und man erwarten würde, daß die Stege des Rohlings durch Vakuumausbildung einfallen bzw. zumindest beachtlich beschädigt werden könnten. Überraschenderweise bleibt auch die Porenstruktur der Rohmischung in dem Rohling erhalten, obwohl der Schaum durch die Erwärmung zerstört wird.

Die Dorne 23 können abschnittweise (z. B. in drei Stufen) oder auch kontinuierlich über ihre Länge und untereinander unterschiedlich beheizbar ausgestaltet sein, um nicht nur eine möglichst gleichmäßige Beheizung der in der Form 20 befindlichen Rohmischung 52 zu erzielen, sondern um letztlich Steine bzw. zunächst Rohlinge mit möglichst großer Homogenität zu erhalten, wobei im übrigen durch eine Regelung bzw. Steuerung der Beheizung der Dorne 23 und der Form 20 zwecks Erwärmung der Rohmischung 52 gegenüber einer gleichmäßigen Beheizung der Form 20 und der Dorne 23 und damit einer im allgemeinen ungleichmäßigen Erwärmung der Rohmischung 52 noch Energie einzusparen ist. Aus diesem Grunde sind auch die Dorne 23 vorzugsweise im allgemeinen nicht mit gleicher Intensität beheizt, sondern weiter außen im Bereich des Formkastens 20' liegende Dorne 23 können zur Erzielung einer gleichmäßigen Erwärmung der Rohmischung 52 mit anderer, in der Regel geringerer Intensität beheizt werden, als weiter innenliegende Dorne 23.

Fig. 11 zeigt eine volumetrisch arbeitende Dosiereinrichtung 60, die unterhalb des Mischers 3 angeordnet ist, der mit einem Rührwerk 3' und einem trichterförmigen Auslauf versehen ist. Die Dosiereinrichtung 60 besteht aus zwei halbzylindrischen Teilen 61, 62, wobei das Teil 62 — koaxial mit dem Teil 61 angeordnet — gegenüber dem ortsfesten Teil 61 verdrehbar um eine Achse ist und mit seiner Außenfläche an der Innenfläche des Teils 61 entlanggleitet. Das Teil 61 besitzt eine Eintrittsöffnung 63 im Bereich des trichterförmigen Auslaufs des Mischers 3 und eine Entleerungsöffnung 64, die schräg nach unten gerichtet ist. Das Teil 62 besitzt eine nach außen offene Kammer 65, in der ein Saugkolben 66 mittels einer Kolbenzylindereinheit 67 verfahrbar angeordnet ist. Zum Füllen der Kammer 65 wird deren Öffnung mit der Eintrittsöffnung 63 des Teils 61 ausgerichtet, während der Saugkolben 66 sich in seinem ausgefahrenen Zustand befindet, in der seine Außenfläche mit der Außenfläche des Teils 62 fluchtet. Danach wird der Saugkolben 66 um eine bestimmte Strecke einwärts bewegt, die durch einen Weggeber 68 bestimmt wird. Auf diese Weise wird Rohmischung volumetrisch bemessen in die Kammer 65 eingesaugt. Verdrängte Luft kann durch Luftaustrittsöffnungen 69 benachbart zum inneren Kammerende austreten. Der Weggeber 68 dient zum Einstellen des Volumens entsprechend der herzustellenden Steingröße.

Das Teil 62 wird dann mit gefüllter Kammer 65 gegenüber dem Teil 61 gedreht (in Fig. 11 im Gegenuhrzeigersinn), bis die Öffnung der Kammer 65 mit der Entleerungsöffnung 64 des Teils 61 fluchtet. Der Kolben 66 wird wieder ausgefahren und damit die Kammer 65 geleert. Hiernach wird das Teil 62 zum erneuten Befüllen der Kammer 65 zurückgedreht, wobei die Kante 64' der Entleerungsöffnung 64 als Abstreifkante für Reste von Rohmischung dient. Das Drehen des Teils 62 gegenüber dem Teil 61 kann mittels eines Schwenkzylinders vorgenommen werden.

Gegebenenfalls kann das Teil 62 mit gefüllter Kammer 65 gewogen und der dabei erhaltene Meßwert zur Einstellung der Rohdichte der Rohmischung verwendet werden.

Wenn mehrere Formen 20 vorhanden sind, sind entsprechend viele Kammern 65 mit Kolben 66 und Öffnungen 63, 64 vorzusehen.

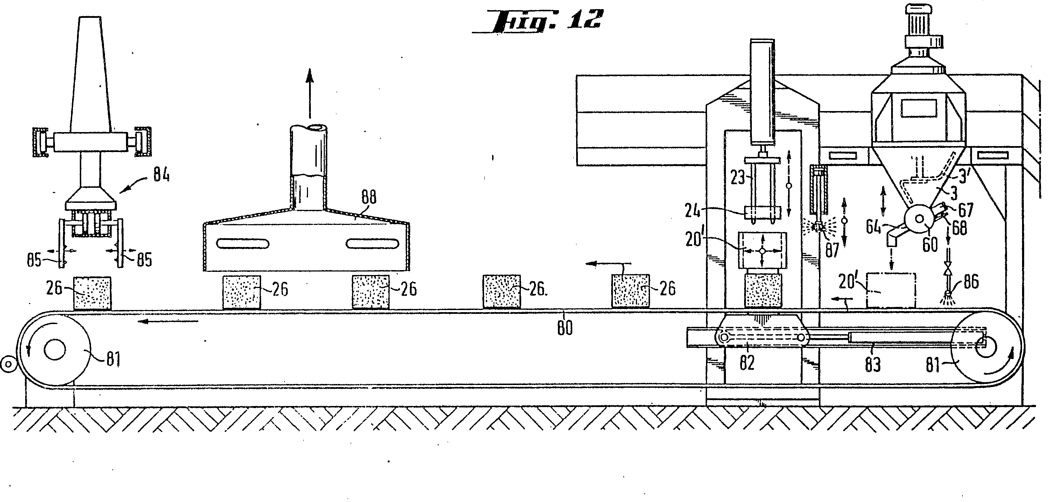

In Fig. 12 ist schematisch eine weitere Ausführungsform einer Vorrichtung zum Herstellen von Steinrohlingen dargestellt, die ein Transportband 80 etwa in Form eines Stahlbandes aufweist, das um zwei Umlenkrollen 81 geführt ist, von denen wenigstens eine angetrieben ist. Der Obertrum des Transportbandes 80 kann dabei zur Abstützung über eine Stahlplatte (nicht dargestellt) laufen. Der Formkasten 20' befindet sich anfänglich unterhalb der Dosiereinrichtung 60, die mit dem Mischer 3 verbunden ist. Der mit der gewünschten Menge an Rohmischung gefüllte Formkasten 20' wird dann in die Formgebungsstation gebracht, wo die Dorne 23 und die Deckelplatte 24 etwa in der vorstehend beschriebenen Weise zur Ausformung des Rohlings in den Formkasten 20' eingefahren werden.

Zusätzlich zu der vorstehend beschriebenen indirekten Beheizung der in der Form 20 befindlichen Rohmischung oder ganz ohne indirekte Beheizung wird die Rohmischung durch ein Hochfrequenzfeld beheizt, wobei das Transportband 80 und die Deckelplatte 24 als Kondensatorplatten dienen.

Der Formkasten 20' ist mit einem Schlitten 82 verbunden, durch den der Formkasten 20' zwischen der Befüllungs- und der Formgebungsstation hin- und herbeweglich ist, zu welchem Zweck an dem Schlitten 82 eine Kolbenzylindereinheit 83 angreift.

Wenn der geformte Rohling 26 eine ausreichende Festigkeit erreicht hat, wird der Formkasten 20' gegenüber dem Schlitten 82 (etwa mittels einer Kolbenzylindereinheit und an vertikalen Stangen geführt, nicht dargestellt) angehoben, wonach die Dorne 23 und die Deckelplatte 24 entfernt werden. Der auf diese Weise entformte Rohling 26 wird durch das Transportband 80 weitertransportiert, um am Ende des Transportbandes 80 von einer Stapeleinrichtung 84, die beispielsweise mit Greifern 85 ausgestattet ist, übernommen zu werden.

Zweckmäßigerweise wird das Transportband von der Befüllungsstation etwa mittels einer Düse 86 mit Trennmittel besprüht. Eine entsprechende Sprüheinrichtung 87 ist für den Formkasten 20' vorgesehen. Statt dessen können aber auch der Formkasten 20' und die Dorne 23 in einem vorzugsweise mit Ultraschall erregten Trennmittelbad eintauchbar sein, so daß anhaftende Reste von Rohmischung dort entfernt werden.

Am Abgabeende des Transportbandes 80 kann eine Reinigungseinrichtung 88 hierfür in Form einer Abstreifwalze, eines Schabers o. dgl. vorgesehen sein.

Die Arbeitsweise der in Fig. 12 dargestellten Vorrichtung eignet sich insbesondere dazu, den Erhitzungsvorgang zum Erzielen der gewünschten Standfestigkeit des Rohlings 26 zu verkürzen derart, daß dieser bereits entformt wird, wenn er eine solche Festigkeit aufweist, daß er zwar ohne weiteres mittels des Transportbandes 80 transportierbar, jedoch noch nicht von der Stapeleinrichtung 84 ergreifbar ist. da hierzu die Festigkeit noch nicht ausreicht. Die weitere Verfestigung des Rohlings 26 bis zur erforderlichen Rohlingsfestigkeit erfolgt dann durch Nachheizen etwa durch Hindurchführen des die Rohlinge 26 transportierenden Transportbandes 80 unter einer Nachheizeinrichtung 88 mit z. B. Infrarotstrahlern oder durch einen Heiztunnel o. dgl.

Das Verfahren und die Vorrichtung gemäß der Erfindung ermöglichen es, Leichtsteine mit geradezu optimalen Eigenschaften auf außerordentlich schnelle und deshalb wirtschaftliche Weise herzustellen, und zwar Leichtsteine, die aufgrund ihrer niedrigen Rohdichte und ihrer Lochung hervorragende Wärmeeigenschaften besitzen und darüber hinaus selbst bei größeren Dimensionen verhältnismäßig leicht und einfach zu handhaben sind, so daß sich eine entsprechend gesteigerte Bauleistung erzielen läßt.

Wie bereits ausgeführt, erfolgt das Durchwärmen der Rohmischung in der Form 20 mit einem Hochfrequenzfeld und ggf. zusätzlich mittels Kontaktwärme (letzteres über die Form 20 und die Dorne 23). Im ersten Fall kann die Bodenplatte 25 und die Deckelplatte 24 der Form 20 als Kondensatorplatten verwendet werden, oder aber das Hochfrequenzfeld wird mit wechselnder Polarität zwischen den Dornen 23 und zwei Außenwänden der Form 20 ausgebildet, an die die hochfrequente Spannung angelegt wird.

Die Herstellung von Steinen gemäß der Erfindung wird nachstehend anhand von Beispielen beschrieben. Gemäß diesen Beispielen werden 10-DF-Steine, d. h. solche mit den Abmessungen 148 mm × 300 mm (Grundfläche) × 238 mm (Höhe) hergestellt, die einen Lochanteil von rund 41% aufweisen. Die Einzelkomponenten werden hierbei abgewogen bereitgestellt und die Schaumdosierung durch Vorwahl der Schäumzeit einer Schaumkanone eingestellt. Die trockenen Komponenten werden in einen Mischer gegeben, und nach dessen Anlaufen beginnt die Zudosierung von Wasser. Nach 35 sec Mischzeit wird Schaum zugesetzt. Nach Ablauf der Schäumzeit von 8 sec erfolgt ein weiteres Nach- und Untermischen des Schaums während 25 sec. Nach Ablauf der Gesamtmischzeit von 60 sec erfolgt die Dosierung der Rohmischung in eine Form, die ebenso wie die zugehörigen Dorne erhitzt wird. Nach etwa 70 sec Standzeit in der Form wird entformt und der Rohling zu einem Autoklaven transportiert, wo er in bekannter Weise einer Dampfhärtung unterzogen wird.

Beispiel 1

Man stellt eine Rohmischung aus folgenden Komponenten her:

10 kg Quarzsand, gewaschener Natursand mit einer Korngröße zwischen 0 und 4 mm, mittlere Korngröße 0,6 bis 1 mm,
5 kg Quarzmehl, Korngröße <0,16 mm,
2,2 kg Wasser,
1,5 kg Kalkhydrat nach DIN 1060,
2,5 kg Zement, Heidelberger Schnellzement (Heidelberger Portlandzementwerke AG, Leinen, Bundesrepublik Deutschland),
600 g Schaum (sulfatierter Fettalkohol, Chemische Fabrik Grünau GmbH, Illertissen, Bundesrepublik Deutschland) entsprechend einer Schaumlaufzeit von 8,5 sec und einer Schaumrohdichte von etwa 80 kg/m³.

Die sich ergebende Rohmischung hat eine Temperatur von 15°C und wird in eine Form gefüllt, deren Kasten eine Temperatur von 75°C und deren Dorne eine Temperatur oben von 76°C und unten von 82°C aufweisen. Vor der Formgebung werden Form und Dorne mit einem Trennmittel behandelt. Nach einer Standzeit von 80 sec wird entformt. Der Überfüllungsgrad der Form beträgt 12%.

Die Rohmischung hat eine Rohdichte von 1150 kg/m³, der Rohling eine Scherbenrohdichte von 1285 kg/m³ und eine Rohlingsfestigkeit von mehr als 0,12 N/mm² und der fertige Stein eine Scherbenrohdichte von 1155 kg/m³, eine Gesamtdichte von 685 kg/m³ und eine Festigkeit von mehr als 2,5 N/mm².

Beispiel 2

Man stellt eine Rohmischung aus folgenden Komponenten her:

10 kg Sand, wie Beispiel 1,
5 kg Kesselschlacke, gebrochen in einer Körnung von 0 bis 4 mm,
2,3 kg Wasser,
1,5 kg Kalkhydrat,
2,25 kg Zement, wie Beispiel 1,
500 g Schaum, wie Beispiel 1.

Die sich ergebende Rohmischung hat eine Temperatur von 20°C und wird in eine Form gefüllt, deren Kasten eine Temperatur von 78°C und deren Dorne eine Temperatur oben von 77°C und unten von 83°C aufweisen. Nach einer Standzeit von 70 sec wird entformt. Der Überfüllungsgrad der Form beträgt 15%.

Die Rohmischung hat eine Rohdichte von 1250 kg/m³, der Rohling eine Scherbenrohdichte von 1375 kg/m³ und eine Rohlingsfestigkeit von mehr als 0,12 N/mm² und der fertige Stein eine Scherbendichte von 1240 kg/m³, eine Gesamtdichte von 735 kg/m³ und eine Festigkeit von 5 N/mm².

Beispiel 3

Man stellt eine Rohmischung aus folgenden Komponenten her:

12 kg Sand, wie Beispiel 1,
3 kg Flugasche mit einer Körnung von 0 bis 4 mm,
2,8 kg Wasser,
1,5 kg Kalkhydrat,
2,25 kg Zement, wie Beispiel 1,
420 g Schaum, wie Beispiel 1.

Die sich ergebende Rohmischung hat eine Temperatur von 20°C und wird in eine Form gefüllt, die wie in Beispiel 2 beheizt ist. Nach einer Standzeit von 60 sec wird entformt. Der Überfüllungsgrad beträgt 7%.

Die Rohmischung hat eine Rohdichte von 1490 kg/m³, der Rohling eine Scherbenrohdichte von 1595 kg/m³ und eine Rohlingsfestigkeit von mehr als 0,12 N/mm² und der fertige Stein eine Scherbendichte von 1435 kg/m³, eine Gesamtdichte von 855 kg/m³ und eine Festigkeit von 5 N/mm².

**Patentansprüche**

1. Verfahren zum Herstellen von Wandbausteinen auf Kalksilikatbasis, bei dem eine Rohmischung im wesentlichen aus einem körnigen silikathaltigen Material, Kalk, Wasser, Zement und Schaum, der als solcher zugesetzt oder in der Rohmischung durch Zusetzen eines Schaumbildners erzeugt wird, hergestellt und die Rohmischung in Formen gegossen und bei erhöhter Temperatur im wesentlichen drucklos zu Steinrohlingen verarbeitet wird unter Ausnutzung der sich ergebenden Erhärtung während der Formstandzeit zur Erzielung einer ausreichenden Festigkeit der Steinrohlinge für die Entformung und nachfolgenden Transport in einen Autoklaven, wo die Steinrohlinge dampfgehärtet werden, dadurch gekennzeichnet, daß die in die Form gegossene Rohmischung mittels Hochfrequenzerwärmung während 10 sec bis 5 min auf eine Temperatur zwischen 45 und 90° C bis zur Erzielung der gewünschten Rohlingsfestigkeit durchgewärmt wird, wobei der Zement, dem ein Abbindebeschleuniger und gegebenenfalls ein -verzögerer zugesetzt ist, mit diesen derart eingestellt wird, daß festigkeitsbildende Reaktionen erst durch die Wärmeeinwirkung in der Form ausgelöst werden.

2. Verfahren nach Anspruch 1, dadurch gekennzeichnet, daß die Rohmischung 10 bis 60 sec mittels Hochfrequenz durchgewärmt wird.

3. Verfahren nach Anspruch 1 oder 2, dadurch abgewandelt, daß anstelle des Zements mit Abbindebeschleuniger ein Schnellzement verwendet wird.

4. Verfahren nach einem der Ansprüche 1 bis 3, dadurch gekennzeichnet, daß die Rohmischung volumetrisch dosiert in die Formen eingefüllt, die dosierte Menge gravimetrisch überprüft und bei den folgenden Chargen die Dichte der Rohmischung durch Änderung des Zusatzes von Wasser und/oder Schaum entsprechend der gravimetrischen Messung nachgeregelt wird.

5. Verfahren nach einem der Ansprüche 1 bis 4, dadurch gekennzeichnet, daß bei einer Formgebung der Steinrohlinge unter Ausformung von durch Stege getrennten Löchern erwärmte Dorne in die in der Form befindliche Rohmischung eingeführt werden.

6. Verfahren nach einem der Ansprüche 1 bis 5, dadurch gekennzeichnet, daß eine Rohmischung verwendet wird, der ein Schaum mit einer Schaumrohdichte von etwa 50 bis 100 g/l, vorzugsweise 70 bis 80 g/l, zugesetzt ist.

7. Verfahren nach einem der Ansprüche 1 bis 6, dadurch gekennzeichnet, daß ein Schaum verwendet wird, dessen Poren $CO_2$ enthalten.

8. Verfahren nach einem der Ansprüche 1 bis 7, dadurch gekennzeichnet, daß eine Rohmischung verwendet wird, die eine Scherbenrohdichte des gehärteten Steins $< 1600\ kg/m^3$, vorzugsweise $< 1200\ kg/m^3$, für einen Lochstein und $< 900\ kg/m^3$ für einen Vollstein liefert.

9. Verfahren nach einem der Ansprüche 1 bis 8, dadurch gekennzeichnet, daß entsprechend der Ausgangstemperatur der Mischung aus silikathaltigem Material, Kalk und Wasser die Schaummenge dosiert wird.

10. Verfahren nach einem der Ansprüche 1 bis 9, dadurch gekennzeichnet, daß entsprechend der Ausgangstemperatur der Mischung aus silikathaltigem Material, Kalk und Wasser die Menge an Verzögerer und/oder Beschleuniger für den Zement dosiert wird.

11. Verfahren nach einem der Ansprüche 1 bis 8, dadurch gekennzeichnet, daß die Temperatur der Mischung aus silikathaltigem Material, Kalk und Wasser und damit die Zugabe an Zement, Beschleuniger und Verzögerer konstant gehalten wird.

12. Verfahren nach einem der Ansprüche 1 bis 11, dadurch gekennzeichnet, daß gelöschter Kalk eingesetzt wird.

13. Vorrichtung zum Herstellen von Steinrohlingen, insbesondere für die Herstellung von Wandbausteinen auf Kalksilikatbasis, mit wenigstens einer Form sowie einer Fülleinrichtung hierfür und mit Einrichtungen zum Entformen der Steinrohlinge und zum Überführen von diesen auf eine Transporteinrichtung, wobei gegebenenfalls in der Form Dorne zum Ausbilden von durch Stege getrennten Löchern in dem in der Form befindlichen Steinrohling vorgesehen sind, dadurch gekennzeichnet, daß eine Heizeinrichtung zum Durchwärmen der Rohmischung in der Form (20) vorgesehen ist, von der zwei Elemente, entweder eine Bodenplatte (25) und eine Deckelplatte (24) der Form (20) oder mit wechselnder Polarität die Dorne (23) und zwei Außenwände der Form (20), Kondensatorplatten bilden, an die eine Hochfrequenzspannung anlegbar ist, und gegebenenfalls die Form (20) und die Dorne (23) beheizbar sind, wobei die Dorne (23) individuell unterschiedlich und in Axialrichtung mit einem einstellbaren Temperaturgefälle beheizbar sind.

14. Vorrichtung nach Anspruch 13, dadurch gekennzeichnet, daß die Deckel- und die Bodenplatte (24, 25) der Form (20) zum Schließen hiervon relativ zueinander beweglich angeordnet und die in dem gewünschten Lochmuster angeordneten Dorne (23) zu einer gemeinsamen Einheit zusammengefaßt sind, wobei die Dorne (23) gemeinsam durch entsprechende Öffnungen in der Deckelplatte (24) von oben in die Form einfahrbar sind.

15. Vorrichtung nach Anspruch 13 oder 14, dadurch gekennzeichnet, daß die Bodenplatte durch ein umlaufendes Transportband (80) gebildet wird.

16. Vorrichtung nach einem der Ansprüche 13 bis 15, dadurch gekennzeichnet, daß die Seitenwandungen (20') und die Deckelplatte (24) der Form (20) jeweils eine regelbare Heizeinrichtung aufweisen, während die Bodenplatte (25, 25') in einer vorgeschalteten Heizeinrichtung vorheizbar ist.

17. Vorrichtung nach einem der Ansprüche 13 bis 16, dadurch gekennzeichnet, daß eine Benetzungseinrichtung (86, 87) zum Benetzen der Form (20) und/oder der Dorne (23) mit einem Trennmittel vorgesehen ist.

18. Vorrichtung nach Anspruch 17, dadurch gekennzeichnet, daß die Dorne (23) in ein mittels Ultraschall erregbares Trennmittelbad eintauchbar sind.

19. Vorrichtung nach einem der Ansprüche 13 bis 18, dadurch gekennzeichnet, daß die Deckelplatte (24) nachfolgend zu den Seitenwandungen (20') der Form (20) und nachfolgend zu den Dornen (23) zum Entformen vom Steinrohling entfernbar ist.

20. Vorrichtung nach einem der Ansprüche 13 bis 19, dadurch gekennzeichnet, daß die Dorne (23) jeweils eine am freien Ende befindliche Belüftungsöffnung aufweisen.

21. Vorrichtung nach einem der Ansprüche 13 bis 20, dadurch gekennzeichnet, daß eine volumetrisch arbeitende Dosiereinrichtung (60), eine Wiegeeinrichtung (51a, 51b) für die dosierte Rohmischung und ein Regelkreis zum Regeln der Rohdichte der Rohmischung durch Veränderung der Zugabe von Wasser und/oder Schaum entsprechend dem durch die Wiegeeinrichtung (51a, 51b) gemessenen Wert vorgesehen sind.

22. Vorrichtung nach einem der Ansprüche 13 bis 21, dadurch gekennzeichnet, daß die Einrichtung zum Überführen der Steinrohlinge zu der Transporteinrichtung eine Nachheizeinrichtung (88) durchläuft.

**Claims**

1. Process for the manufacture of wall bricks based on lime silicate, wherein a raw mix is prepared essentially from a granular silicate-containing material, lime, water, cement and foam which is added as such or is produced in the raw mix by the addition of a foam-former, the raw mix is poored into moulds and treated, at elevated temperature and substantially without pressure, to give green bricks, utilising the hardening of the cement, which results during the moulding, for obtaining an adequate strength of the green bricks for the mould release and the subsequent transport into an autoclave, where the green bricks are steam-hardened, characterized in that the raw mix poored into the mould is heated through and through by high frequency heating during 10 seconds to 5 minutes to a temperature of between 45 and 90°C, where the cement to which a setting accelerator and, if appropriate, a setting retarder is added is adjusted with these so that the strength forming reactions are first released by the heat influence in the mould.

2. Process according to claim 1, characterized in that the raw mix is heated through and through by using high frequency during 10 to 60 seconds.

3. Process according to claim 1 or 2, characterized in that instead of the cement with setting accelerator a jet cement is used.

4. Process according to one of claims 1 to 3, characterized in that the raw mix is filled in metered volumes into the moulds, the metered quantity is checked gravimetrically and, for the subsequent charges, the density of the raw mix is re-regulated by altering the addition of water and/or foam in accordance with the gravimetric measurement.

5. Process according to one of the claims 1 to 4, characterized in that during the moulding of the green bricks heated spikes are introduced into the raw mix in the mould for the formation of holes separated by webs.

6. Process according to one of claims 1 to 5, characterized in that a raw mix is used, to which a foam of an apparent foam density of from about 50 to 100 g/litre, preferably 70 to 80 g/litre, has been added.

7. Process according to one of claims 1 to 6, characterized in that a foam is used, the pores of which contain $CO_2$.

8. Process according to one of claims 1 to 7, characterized in that a raw mix is used which gives an apparent density of the body of the hardened brick of $<1600$ kg/m$^3$, preferably $<1200$ kg/m$^3$ for a perforated and $<900$ kg/m$^3$ for a solid brick.

9. Process according to one of claims 1 to 8, characterized in that the quantity of foam is metered in accordance with the initial temperature of the mix of silicate-containing material, lime and water.

10. Process according to one of claims 1 to 9, characterized in that the quantity of retarder and/or accelerator for the cement is metered in accordance with the initial temperature of the mix of silicate-containing material, lime and water.

11. Process according to one of claims 1 to 8, characterized in that the temperature of the mix of silicate-containing material, lime and water, and hence the addition of cement accelerator and retarder are kept constant.

12. Process according to one of claims 1 to 11, characterized in that slaked lime is used.

13. Equipment for the production of green bricks, in particular for the production of wall bricks based on lime silicate, having at least one mould and one filling device for the latter, and devices for releasing the green bricks from the mould and transferring them onto a conveyor device, spikes being provided in the mould, if appropriate, for the formation of holes, separated by webs, in the green bricks present in the mould, characterized in that a heating device for heating the raw mix in the mould (20) through and through is provided, two elements of the device, either a bottom plate (25) and a cover plate (24) of the mould (20) or, with alternating polarity, the spikes (23) and two external walls of the mould (20) form capacitor plates to which a high-frequency voltage is appliable, and, if appropriate, the mould (20) and the spikes (23) are heatable, the spikes (23) being heatable individually to different extents and with an adjustable temperature gradient in the axial direction.

14. Equipment according to claim 13, characterized in that the cover plate (24) and bottom plate (25) of the mould (20) are arranged to be movable relative to one another, to enable them to be closed, and the spikes (23) arranged in the desired hole pattern are combined into a common unit, it being possible for the spikes (23) to be moved together into the mould from above through appropriate openings in the cover plate (24).

15. Equipment according to claim 13 or 14, characterized in that the bottom plate is formed by a continuous conveyor belt (80).

16. Equipment according to one of claims 13 to 15, characterized in that the side walls (20') and the cover plate (24) of the mould (20) each have a controllable heating device, whilst the bottom plate (25, 25') can be preheated in an upstream heating device.

17. Equipment according to one of claims 13 to 16, characterized in that a wetting device (86, 87) for wetting the mould (20) and/or the spikes (23) with a release agent is provided.

18. Equipment according to claim 17, characterized in that the spikes (23) can be immersed into an ultrasonically excitable bath of release agent.

19. Equipment according to one of claims 13 to 18, characterized in that, for releasing the green brick from the mould, the cover plate (24) can be removed subsequently to the side walls (20') of the mould (20) and subsequently to the spikes (23).

20. Equipment according to one of claims 13 to 19, characterized in that the spikes (23) each have a vent orifice located on the free end.

21. Equipment according to one of claims 13 to 20, characterized in that a volumetrically functioning metering device (60), a weighing device (51a, 51b) for the metered raw mix and a regulating circuit for regulating the apparent density of the raw mix by altering the addition of water and/or foam in accordance with the value measured by the weighing device (51a, 51b) are provided.

22. Equipment according to one of claims 13 to 21, characterized in that the device for transferring the green bricks to the conveyor device passes through a re-heating device (88).

**Revendications**

1. Procédé de fabrication de parpaings pour murs à base de silicate de chaux, dans lequel on produit un mélange brut exxentiellement composé d'une matière granuleuse contenant un silicate, de chaux, d'eau, de ciment et de mousse qui est ajoutée telle quelle ou produite dans le mélange brut par addition d'un agent générateur de mousse, on moule le mélange brut à température élevée et à peu près sans pression, dans des moules, pour former des parpaings crus et, en utilisant le durcissement assuré par le ciment pendant le moulage pour obtenir une résistance de parpaings crus suffisante pour le démoulage et le transport consécutif dans un autoclave où les parpaings crus sont durcis à la vapeur, caractérisé en ce qu'on chauffe le mélange brut à coeur par chauffage à haute fréquence durant un intervalle allant de 10 secondes à 5 mn. à une température comprise entre 45 et 90° C, jusqu'à ce qu'on ait obtenu la résistance de parpaing cru désirée, et en ce que le ciment utilisé avec un accélérateur de prise et éventuellement un retardateur de prise, est ajusté avec cet accélérateur ou ce retardateur de telle façon que les réactions provoquant le durcissement ne soient déclenchées que dans le moule sous l'effet de l'échauffement.

2. Procédé selon la revendication 1, caractérisé en ce qu'on chauffe le mélange brut à coeur pendant un temps de 10 à 60 s par chauffage à haute fréquence.

3. Procédé suivant la revendication 1 ou 2, caractérisé en ce qu'au lieu d'un ciment avec accélérateur de prise, on utilise un ciment à prise rapide.

4. Procédé selon l'une des revendications 1 à 3, caractérisé en ce que le mélange brut est coulé dans les moules avec dosage volumétrique; la quantité dosée est vérifiée par voie gravimétrique et, pour les charges suivantes, la densité du mélange brut est corrigée en fonction de la mesure gravimétrique, par modification de l'addition d'eau et/ou de mousse.

5. Procédé selon l'une des revendications 1 à 4, caractérisé en ce que dans le cas du moulage des parpaings crus avec formation de trous séparés par des cloisons, on introduit des noyaux dans le mélange brut se trouvant dans le moule.

6. Procédé selon l'une des revendications 1 à 5, caractérisé en ce qu'on utilise un mélange brut auquel est ajouté une mousse possédant une densité brute de mousse d'environ 50 à 100 g/l, de préférence de 70 à 80 g/l.

7. Procédé selon l'une des revendications 1 à 6, caractérisé en ce qu'on utilise une mousse dont les pores contiennent du $CO_2$.

8. Procédé selon l'une des revendications 1 à 7, caractérisé en ce qu'on utilise un mélange brut qui donne une densité brute de pâte du parpaing durci $<1600$ kg/m$^3$, de préférence $<1200$ kg/m$^3$ pour un parpaing creux et $<900$ kg/m$^3$ pour un parpaing plein.

9. Procédé selon l'une des revendications 1 à 8, caractérisé en ce que la quantité de mousse est dosée en fonction de la température de départ du mélange composé d'une matière contenant un silicate, de chaux et d'eau.

10. Procédé selon une des revendications 1 à 9, caractérisé en ce que la quantité de retardateur et/ou d'accélérateur pour le ciment est dosée en fonction de la température de départ du mélange composé d'une matière contenant un silicate, de chaux et d'eau.

11. Procédé selon une des revendications 1 à 8, caractérisé en ce que la température du mélange composé d'une matière contenant un silicate, de chaux et d'eau et, par conséquent, l'addition de ciment, d'accélérateur et retardateur sont maintenues constantes.

12. Procédé selon une des revendications 1 à 11, caractérisé en ce qu'on utilise de la chaux éteinte.

13. Machine pour la fabrication de parpaings crus, notamment pour la fabrication de parpaings pour murs à base de silicate de chaux, comportant au moins un moule ainsi qu'un dispositif de remplissage pour ce moule et des dispositifs pour démouler les parpaings crus et pour les transférer à un dispositif de transport, des noyaux pour la formation de trous séparés par des cloisons dans le parpaing cru contenu dans le moule étant éventuellement prévus dans le moule, caractérisée en ce qu'il est prévu un dispositif de chauffage pour chauffer à coeur le mélange brut contenu dans le moule (20), dont deux éléments, soit une plaque de fond (25) et un couvercle (24) du moule (20), soit avec une polarité alternative, les noyaux (23) et deux parois extérieures, du moule (20), forment des armatures de condensateur auxquelles peut être appliquée une tension à haute fréquence, le moule (20) et les noyaux (23) pouvant éventuellement être chauffés, les noyaux (23) pouvant être chauffés différemment les uns des autres et avec un gradient de température réglable dans la direction axiale.

14. Machine selon la revendication 13, caractérisé en ce que le couvercle et la plaque de fond (24, 25) du moule (20) sont montés mobiles l'un par rapport à l'autre pour la fermeture du moule, et les noyaux (23) disposés selon le dessin de trous désiré sont réunis en une unité commune, les noyaux (23) pouvant être introduits ensemble dans le moule de haut en bas à travers des ouvertures correspondantes ménagées dans le couvercle (24).

15. Machine selon la revendication 13 ou 14, caractérisée en ce que la plaque de fond est formée par une bande transporteuse (80) en mouvement.

16. Machine selon une des revendications 13 à 15, caractérisé en ce que les parois latérales (20') et le couvercle (24) du moule (20) présentent chacune un dispositif de chauffage réglable tandis que la plaque de fond (25, 25') peut être chauffée dans un dispositif de chauffage monté en amont.

17. Machine selon une des revendications 13 à 16, caractérisée en ce qu'il est prévu un dispositif de mouillage (86, 87) destiné à mouiller le moule (20) et/ou les noyaux (23) avec un agent de démoulage.

18. Machine selon la revendication 17, caractérisée en ce que les noyaux (23) peuvent être plongés dans un bain d'agent de démoulage pouvant être excité par des ultrasons.

19. Machine selon l'une des revendications 13 à 18, caractérisée en ce que la plaque couvercle (24) peut être enlevée après les parois latérales (20') du moule (20) et après les noyaux (23) pour le démoulage du parpaing cru.

20. Machine selon une des revendications 13 à 19, caractérisée en ce que les noyaux (23) présentent chacun une ouverture de ventilation située à l'extrémité libre.

21. Machine selon une des revendications 13 à 20, caractérisée en ce qu'il est prévu un dispositif de dosage (60) à fonctionnement volumétrique, un dispositif de pesée (51a, 51b) pour le mélange brut dosé et un circuit de réglage destiné à régler la densité apparente du mélange brut par modification de l'addition d'eau et de mousse en fonction de la valeur mesurée par le dispositif de pesée (51a, 51b).

22. Machine selon une des revendications 13 à 21, caractérisée en ce que le dispositif destiné à transférer les parpaings crus au dispositif de transport traversent un dispositif de post-chauffage (88).

Fig. 1
1'
1''
2
H2O
2'
4
6
8'
8''
5
5'
9'
9''
H2O
3
T
9
7
10
11
fertige Steine

21
20'
25
20
22
23
24
20
24
22
25
20'
23
24
24
26
25
25
20
20'
25
23
20'
25
21
20
a)
b)
c)
d)
e)
f)
g)
h)
i)
a)

Fig. 2

23
24
23'
23
24
20'
23
20
23'
25

Fig. 3

27
27
27
27
27
24
Fig. 4
23
22
Fig. 5
23

Fig. 6
43
44
45
44
42
41
41
40
45
22
23
37
20
24
36
VII
VII
20'
25
39
39
35
34
33
34
34
38
30
30
31
31
32
20
37
34
36
20'
34
Fig. 7
38
25
38
37

Fig. 8
43
44
45
42
45
41
40
26
20
20'
24
25
35
20
35
33
34
31
30
31
32

Fig. 9
51b
51a
59
53
53
56
57
58
58
54
52
37
37
50
51
20'
55
25
35
33
34
34
30
38

Fig. 10
59
54
58
57
51
55
20'
20
25
39
35
56
30

3'
3
Fig. 11
63
60
66
65
61
69
62
69
64'
64
67
68

Fig. 12
3'
3
67
68
60
64
86
81
83
20'
87
23
24
82
26
80
88
84
85